(19) Europäisches Patentamt
European Patent Office
Office européen des brevets

(11) **EP 2 239 557 B1**

(12) **EUROPÄISCHE PATENTSCHRIFT**

(45) Veröffentlichungstag und Bekanntmachung des Hinweises auf die Patenterteilung:
**25.01.2012 Patentblatt 2012/04**

(51) Int Cl.:
***G01N 15/02*** *(2006.01)*

(21) Anmeldenummer: **09157747.8**

(22) Anmeldetag: **09.04.2009**

(54) **Verfahren zur Messung luftgetragener biologischer Gefahrstoffe**

Method for measuring airborne biological hazardous agents

Procédé de mesure de matières nocives biologiques portées par l'air

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(43) Veröffentlichungstag der Anmeldung:
**13.10.2010 Patentblatt 2010/41**

(73) Patentinhaber: **Fraunhofer-Gesellschaft zur Förderung der angewandten Forschung e.V.**
**80686 München (DE)**

(72) Erfinder:
• **Dunkhorst, Wilhelm**
**32469 Petershagen (DE)**
• **Lödding, Hubert**
**31275 Lehrte (DE)**
• **Schwarz, Katharina**
**30625 Hannover (DE)**
• **Koch, Wolfgang**
**31634 Steimbke (DE)**
• **Holländer, Andreas**
**14482 Postdam (DE)**
• **Barth, Stefan**
**52076 Aachen (DE)**
• **Seidel, Björn**
**71679 Asperg (DE)**

• **Klockenbring, Torsten**
**53121 Bonn (DE)**
• **Sulz, Gerd**
**79238 Ehrenkirchen (DE)**
• **Bolwien, Carsten**
**79115 Freiburg (DE)**
• **Schmitt, Karin**
**79108 Freiburg (DE)**
• **Muranyi, Peter**
**85354 Freising (DE)**
• **Hofbauer, Wolfgang Karl**
**6330 Kufstein (AT)**
• **Rennebarth, Thorsten Sven**
**82291 Mammendorf (DE)**
• **Renzl, Anna Maria**
**83626 Valley (DE)**

(74) Vertreter: **Haggenmüller, Christian**
**Maiwald Patentanwalts GmbH**
**Elisenhof**
**Elisenstraße 3**
**80335 München (DE)**

(56) Entgegenhaltungen:
EP-A- 1 750 129 WO-A-03/009921
WO-A-2005/078674 WO-A-2008/021617
US-A1- 2006 257 287

**Beschreibung**

Die Erfindung betrifft eine Vorrichtung und ein Verfahren zur Messung luftgetragener biologischer Gefahrstoffe, wie z.B. human-, tier- und pflanzenpathogene Bioaerosole oder hygienisch relevante Keime. Anwendungen liegen u.a. auf dem Gebiet der Luftüberwachung in den Bereichen a) biologische Gefahrenabwehr, b) Arbeitsplatz-, c) Krankenhaus- und Innenraumhygiene, d) Pharma- und Lebensmittelproduktion oder e) Tierhaltung, wobei andere Bereiche, in denen die Überwachung der Luft auf pathogene Erreger oder hygienisch relevante Keime erforderlich ist, ebenfalls Einsatzgebiet der Erfindung sein können.

Luftschadstoffe in Form von Mikroorganismen und Toxinen stellen eine Bedrohung für die Gesundheit und das Wohlbefinden der Bevölkerung dar und können zu erheblichen wirtschaftlichen Folgeschäden führen. Hierfür sollen stellvertretend folgende Beispiele angeführt werden:

a) Gesundheitliche Belastung durch Exposition von luftgetragenen Schimmelpilzsporen in Wohnungen,
b) Infektion durch Krankenhauskeime,
c) mikrobiologische Kontamination von Produkten und Prozessen in der Arznei- und Lebensmittelproduktion,
d) Befall von Kulturpflanzen mit pathogenen Erregern.

Darüber hinaus ist der gesamte Bereich der biologischen Gefahrenabwehr zu nennen.

Allen genannten Beispielen ist gemeinsam, dass für die Ergreifung geeigneter (Schutz-) Maßnahmen eine schnelle Identifikation der vorliegenden mikrobiellen Luftbestandteile erforderlich ist. Hierfür bedarf es kleiner, mobiler und schneller Verfahren. Je nach Anwendungsfall sind an die Spezifität des Detektionsverfahrens unterschiedliche Anforderungen gestellt.

Die überwiegende Mehrzahl der derzeit verwendeten Verfahren zur Feststellung der Luftbelastung mit biologischen Verunreinigungen sind zweistufig d.h. mit einem Gerät erfolgt die Probenahme aus der Luft und die Aufkonzentrierung der Bioaerosolpartikel. In einem zweiten, nachgeschalteten Verfahren wird die Probe auf ihren Gehalt an spezifischen Verunreinigungen untersucht. Die gängigen Mechanismen der Abscheidung, die den existierenden Probenahmesystemen zugrunde liegen, sind Sedimentation, Trägheitsabscheidung (z.B. Impaktion), Abscheidung durch Zentrifugalkraft, elektrostatische Abscheidung und Filtration (als eine Kombination aus Trägheits- und Diffusionsabscheidung). Aufnahmemedien, in denen die abgeschiedenen Bioaerosole im Verlauf der Probenahme aufkonzentriert werden, sind geeignete Filtermedien, Wasser, Agarschichten oder flüssige Nährmedien sowie feste Nährmedien. Für die Identifizierung und Quantifizierung der abgeschiedenen Bioaerosolbestandteile bzw. ausgewählter Bestandteile davon sind ebenfalls eine Reihe von Verfahren etabliert, die wie folgt klassifiziert werden können:

- (Fluoreszenz-) Mikroskopie zur Klassifizierung und Identifizierung optisch unterscheidbarer Objekte bzw. markierter Partikel.
- Immunhistologische Methoden zur Quantifizierung ausgewählter Bestandteile bzw. markierter Partikel.
- Biochemische Methoden zum Nachweis bestimmter charakteristischer Metabolite oder Zellbestandteile der zu identifizierenden biologischen Partikel, z.B. durch HPLC.
- Molekularbiologische Methoden, Messung von DNA, RNA, beispielsweise mittels PCR unter Verwendung von Gensonden, PCR-Fingerprinting, "Restriction Fragment Length Polymorphism"-Vergleich, Karyotyping, u.ä.
- Physikalisch-chemische Methoden wie Lumineszenz, Massenspektrometrie, Durchflusszytometrie.
- Kultur unter Verwendung von Selektivnährmedien in Kombination mit chemischen Indikatoren, die die Vermehrung der gesuchten Keime anzeigen.
- Kultivierung und Identifikation veranehrungsfähiger Organismen durch mikroskopische, biochemische und genetische Methoden.
- Polyphasischer Ansatz unter Kombination der oben genannten Methoden.

Daneben gibt es Verfahren, die luftgetragene Bioaerosole in Echtzeit messen. Dies sind beispielsweise Partikelzähler, die ähnlich wie bei der Durchflusszytometrie gleichzeitig Streulichtsignale und Fluoreszenzlichtsignale messen. In den letzten Jahren hat sich im Bereich der Aerosolpartikelanalyse weiterhin die Einzelpartikelmassenspektrometrie etabliert. Durch Anwendung der sog. MALDI-Technik ("matrix assisted laser desorption/ionization") gelang es, in begrenztem Umfang Bioaerosole zu detektieren. Die gerätetechnische - Umsetzung ist allerdings für beide erwähnten Echtzeitverfahren aufwendig und teuer. Darüber hinaus sind sie wenig spezifisch, können aber wegen ihrer Echtzeitmessfähigkeit sehr gut für kontinuierliche Überwachsungsaufgaben gefährdeter Bereiche und zur Auslösung spezifischer Messungen verwendet werden.

EP1750129 A2 offenbart ein optoelektronisches System für die Detektion von Partikeln. Dieses System enthält eine erste Reaktionskammer, einen Partikelkollektor, der so ausgestaltet ist, dass er die Partikel in der ersten Reaktionskammer abscheiden kann, sowie ein Reservoir, welches Ermitterzellen enthält

Es ist daher eine Aufgabe der vorliegenden Erfindung, die oben beschriebenen Nachteile möglichst zu vermeiden und ein Verfahren sowie eine Vorrichtung bereit zu stellen, mit denen eine möglichst einfache, aber gleichzeitig auch schnelle und sensitive Bestimmung der Luftbelastung durch Bioaerosolpartikel möglich ist.

Gemäß eines ersten Aspekts der vorliegenden Erfindung wird diese Aufgabe durch die Bereitstellung einer Vorrichtung gemäß Anspruch 1 zur Messung von Bioaerosolpartikeln gelöst.

In der erfindungsgemäßen Vorrichtung werden Probenahme- und Abscheidetechnik, die Probenaufbereitung und das Probenanalyseverfahren in neuartiger Weise in einem Gerät gekoppelt.

Im Rahmen der vorliegenden Erfindung wird unter einem "Bioaerosol" bzw. "Bioaerosolpartikel" ein luftgetragenes Teilchen biologischer Herkunft verstanden. Solche Teilchen biologischer Herkunft enthalten z.B. Schimmelpilze, Bakterien, Endotoxine, Pilz- und Bakteriensporen, Mycelbruchstücke von Schimmelpilzen, Hefen, Pollen, sowie Abbau- und Stoffwechselprodukte von Mikroorganismen.

Wie oben dargelegt, umfasst die erfindungsgemäße Vorrichtung als Komponente (i) eine Probenahme- und Abscheideeinheit für die Entnahme einer Bioaerosolpartikel enthaltenden Luftprobe und die flächenmäßig definierte Abscheidung einer definierten Partikelgrößenfraktion der Bioaerosolpartikel,

Die Entnahme einer Luftprobe aus einem Umgebungsvolumen kann z.B. über eine Lufteinlassöffnung in der Probenahme- und Abscheideeinheit erfolgen, so dass ein bestimmter Ansaugvolumenstrom von der Probenahme- und Abscheideeinheit aufgenommen wird. In einer bevorzugten Ausführungsform kann die Entnahme einer Luftprobe kontinuierlich erfolgen.

Unter einer "flächenmäßig definierten Abscheidung" von Bioaerosolpartikeln wird im Rahmen der vorliegenden Erfindung eine Abscheidung von Bioaerosolpartikeln verstanden, die auf einer definierten Fläche erfolgt. Beispielhaft kann an dieser Stelle die Abscheidung von Partikeln in Form eines schmalen Streifens genannt werden. Dies wird nachfolgend noch eingehender diskutiert werden.

Im Rahmen der vorliegenden Erfindung wird unter einer "definierten Partikelgrößenfraktion der Bioaerosolpartikel" eine Fraktion von Partikeln verstanden, die durch einen oberen und unteren Grenzwert bezüglich des Partikeldurchmessers charakterisiert ist und somit nur Partikel mit einem Durchmesser innerhalb dieses durch den oberen und unteren Grenzwert bestimmten Bereichs enthält. Durch die Auswahl eines bestimmten Partikeldurchmesserbereichs können insbesondere bestimmte störende Fremdpartikel (z.B. größere Staubpartikel) herausgefiltert werden.

Bevorzugt handelt es sich bei der definierten Partikelgrößenfraktion um Bioaerosolpartikel mit einem Durchmesser im Bereich von 0,02 $\mu$m bis 30 $\mu$m, noch bevorzugter 0,8 $\mu$m bis 10 $\mu$m.

Probenahme- und Abscheidevorrichtungen für Bioaerosolpartikel, mit denen grundsätzlich eine flächenmäßig definierte Abscheidung sowie die Bereitstellung einer definierten Partikelgrößenfraktion möglich ist, sind dem Fachmann an sich bekannt.

In einer bevorzugten Ausführungsform weist die Probenahme- und Abscheideeinheit mindestens einen Trägheitsabscheider und/oder mindestens ein elektrostatischen Abscheider auf.

Bevorzugt handelt es sich bei dem Trägheitsabscheider um einen Impaktor oder Virtualimpaktor. Impaktoren sind dem Fachmann bekannte Vorrichtungen zur Partikelgrößen abhängigen Messung von Aerosolen, wobei die Luft durch eine Düse (Impaktierdüse) geführt wird und hinter dieser Düse eine Abscheidefläche bzw. Impaktierfläche angeordnet ist. Auf der Impaktierfläche scheiden sich die Teilchen ab, die aufgrund ihrer größeren Trägheit dem der Impaktierfläche ausweichenden Luftstrom nicht folgen können, sondern ihre Austrittsrichtung aus der Düse im Wesentlichen beibehalten. Ein Virtualimpaktor, der dem Fachmann ebenfalls grundsätzlich bekannt ist, trennt den angesaugten Luftvolumenstrom in zwei Volumenströme Q1 und Q2 auf. Die Partikel bleiben in beiden Volumenströmen zunächst luftgetragen. Der Volumenstrom Q2 wird senkrecht zum Hauptstrom abgesaugt. Partikel, die aufgrund ihrer Massenträgheit dem so umgelenkten Volumenstrom nicht folgen können, verbleiben in dem um den Volumenstrom Q2 verminderten Hauptstrom. Wirkungsweise und prinzipieller Aufbau von Impaktoren bzw. Virtualimpaktoren werden z.B. in William C. Hinds, "Aerosol Technology - Properties. behaviour, and measurement of airborne particles", John Wiley & Sons, 1999, beschrieben.

Bevorzugt fungiert die Polymerschicht des Substrats als Abscheidefläche bzw. Impaktionsfläche eines Impaktors. Enthält die Probenahme- und Abscheideeinheit zwei oder mehr Impaktoren, so fungiert die Polymerschicht als Abscheidefläche bzw. Impaktionsfläche des letzten Impaktors.

In einer bevorzugten Ausführungsform weist die Probenahme- und Abscheideeinheit in Strömungsrichtung der entnommenen Luftprobe zuerst einen ersten Impaktor, dann einen Virtualimpaktor und schließlich einen zweiten Impaktor auf.

Bevorzugt weist der Impaktor, für den die Polymerschicht als Abscheidefläche fungiert (in der oben erwähnten bevorzugten Ausführungsform also z.B. der zweite Impaktor), eine Schlitzdüse mit einer rechteckigen Schlitzöffnung, die bevorzugt eine Länge im Bereich von 10 mm bis 50 mm und eine Breite im Bereich von 0,05 bis 1 mm hat, auf. Die Oberfläche der Polymerschicht ist dabei bevorzugt parallel zur rechteckigen Öffnungsfläche der Schlitzdüse angeordnet, so dass ein aus der Schlitzdüse austretende Bioaerosolpartikelstrahl in Form eines Partikelstreifens auf der Polymerschicht abgeschieden wird. In Abhängigkeit von der erwünschten definierten Abscheidefläche sind für diesen Impaktor aber auch andere Düsenöffnungsquerschnitte möglich, z.B. kreisförmig, elliptisch etc.

Wie oben dargelegt, umfasst die erfindungsgemäße Vorrichtung als Komponente (ii) ein Substrat, welches einen Träger und eine auf diesem Träger angebrachte Polymerschicht umfasst, wobei

    - das Substrat gegenüber der Probenahme- und Abscheideeinheit so angebracht ist, dass auf der Polymerschicht die flächenmäßig definierte Abscheidung der definierten Partikelgrößenfraktion der Bioaerosolpartikel erfolgen kann, und

- die Polymerschicht von mindestens einem Polymer gebildet wird, dessen Viskosität sich unter dem Einfluss einer äußeren Wirkung ändern kann.

Der Träger kann aus jedem Material gefertigt sein, auf dem sich eine Polymerschicht anbringen lässt und das die Detektion von markierten Bioaerosolpartikel nicht nachteilig beeinflusst.

Bevorzugt besteht der Träger aus einem optisch transparenten Material.

Wie bereits oben an einer bevorzugten Ausführungsform diskutiert, kann die flächenmäßig definierte Abscheidung der Bioaerosolpartikel z.B. dadurch erfolgen, dass das Substrat mit der Polymerschicht in Nachbarschaft zu einer Impaktionsdüse angeordnet ist und als Impaktionsfläche fungiert. In Abhängigkeit von der Querschnittsfläche der Düsenaustrittsöffnung kann somit eine flächenmäßig definierte Abscheidung von Bioaerosolpartikeln bewirkt werden.

Bevorzugt weist die Polymerschicht eine Schichtdicke im Bereich von 1 μm bis 1000 μm, noch bevorzugter im Bereich von 5 μm bis 200 μm auf.

Bei den äußeren Wirkungen, mit denen die Viskosität des Polymers bzw. der Polymere der Polymerschicht geändert werden kann, handelt es sich bevorzugt um Wärme, Luftfeuchtigkeit bzw. Wassergehalt, elektromagnetische Strahlung wie z.B. UV-Strahlung, oder Kombinationen dieser äußeren Einwirkungen.

Bevorzugt wird das Polymer so gewählt, dass eine reversible Änderung der Viskosität möglich ist.

In einer bevorzugten Ausführungsform handelt es sich bei dem Polymer um ein hydrophiles Polymer, das ein Hydrogel bilden kann, oder um ein Gemisch verschiedener hydrophiler Polymere, die jeweils ein Hydrogel bilden können.

Im Rahmen der vorliegenden Erfindung wird der Begriff "Hydrogel" in seiner üblichen, dem Fachmann bekannten Bedeutung verwendet und bezieht sich daher auf ein Wasser enthaltendes Polymer, dessen Moleküle chemisch, z.B. durch kovalente und/oder ionische Bindungen, oder physikalisch, z.B. durch partielle Kristallisation der Polymerketten, zu einem dreidimensionalen Netzwerk verknüpft sind.

Bevorzugt wird das Hydrogel bzw. das hydrophile Polymer, welches ein Hydrogel bilden kann, aus Agarose, Polyacrylamid, Carrageenan, Alginaten, Stärke und deren Derivaten, Polyvinylalkohol, Polyvinylpyrrolidon, Polyhydroxymethylmethacrylat, Cellulosederivaten wie z.B. Hydroxyalkylcellulosen, oder deren Gemischen ausgewählt.

Neben dem Netzwerkbildner kann das Hydrogel weitere Stoffe enthalten, die für die Erkennung der Keime nötig sind. Insbesondere sind das Antikörper. Um die Funktionsfähigkeit der Antikörper auch über eine längere Lagerzeit zu erhalten, können weitere Stoffe wie Puffersalze, Schutzproteine und Hilfsstoffe (Z.B. Ectoin) zugesetzt werden. Darüber hinaus können dem Gel noch Substanzen beigesetzt werden, die insbesondere dessen physikalische Eigenschaften modifizieren und damit die Feineinstellung dieser Eigenschaften erlauben. So kann die Schmelztemperatur des Gels z.B. durch Glycerin oder Polyethylenglykol eingestellt werden.

Wie oben dargelegt, enthält die erfindungsgemäße Vorrichtung als Komponente (iii) eine Vorrichtungseinheit zur Viskositätsmodifizierung der Polymerschicht.

Die Vorrichtungseinheit zur Viskositätsmodifizierung der Polymerschicht wird ausgewählt aus einem Heiz- und/oder Kühlelement zur Erwärmung bzw. Abkühlen der Polymerschicht, einer Vernebelungseinheit zur Erzeugung von Wassertröpfchen bzw. Nebeltröpfchen, einem Luftbefeuchter und/oder Luftentfeuchter, einem UV-Strahler bzw. einer UV-Strahlungsquelle, oder Kombinationen davon. Solche Vorrichtungen sind dem Fachmann an sich bekannt.

In einer bevorzugten Ausführungsform ist die Vernebelungseinheit zur Erzeugung von Wassertröpfchen in der Probenahme- und Abscheideeinheit angebracht. Bevorzugt werden dabei die Wassertröpfchen von einem Volumenstrom der entnommenen Luftprobe zur Polymerschicht transportiert.

Bei der Verwendung von Luftbefeuchtern und/oder Luftentfeuehtern können diese bevorzugt in Nachbarschaft zum Substrat angebracht sein.

Bei der Verwendung eines Heiz- und/oder Kühlelements sind diese bevorzugt in direktem thermischen Kontakt mit dem Substrat, z.B. indem die Heiz- und/oder Kühlelemente in das Substrat integriert sind.

Wie oben dargelegt, weist die erfindungsgemäße Vorrichtung als weiteren Bestandteil (iv) Sondenmoleküle auf, die mindestens eine Markierung aufweisen und durch molekulare Wechselwirkung spezifisch an Bioaerosolpartikel oder Bestandteile eines Bioaerosolpartikels binden können.

Im Rahmen der vorliegenden Erfindung wird der Begriff "Sondenmolekül" oder "molekulare Sonde" in seiner üblichen, dem Fachmann geläufigen Bedeutung verwendet und bezieht sich auf ein Molekül, das zum Nachweis anderer Moleküle durch ein bestimmtes charakteristisches Bindungsverhalten bzw. eine bestimmte Reaktivität verwendet wird. Als Sonde kommt jede Art von Molekül in Frage, das zum Nachweis eines anderen Moleküls geeignet ist, d.h. eine spezifische Affinität für ein bestimmtes Target aufweist.

In einer bevorzugten Ausführungsform wird das Sondenmolekül ausgewählt aus Antikörpern, deren Derivaten und/oder Fragmenten, Peptiden, Proteinen, Antigenen, Kohlenhydraten, Nukleinsäuren, Liganden, Lektinen, Rezeptorbindungsmolekülen, an Ionenpumpen und/oder kanalbildende Proteine bindende Adhäsionsmolekülen, und Derivaten, Mutanten oder Kombinationen davon.

Im Rahmen der vorliegenden Erfindung wird der Begriff "Markierung" bzw. "Marker" im Zusammenhang mit einem Sondenmolekül in seiner üblichen, dem Fachmann geläufigen Bedeutung verwendet und bezeichnet eine analytisch detektierbare, bevorzugt optisch detektierbare Einheit.

Bevorzugt wird die Markierung aus einer Fluoreszenzmarkierung, Lumineszenzmarkierung, Metallmarkierung, Ramanmarkierung, oder Kombinationen davon ausgewählt. Solche Markierungen bzw. Marker sind dem Fachmann an sich bekannt. Bei der Ramanmarkierung kann es sich in einer bevorzugten Ausführungsform um eine sogenannte Raman/SERS-Markierung handeln, die dem Fachmann ebenfalls bekannt ist. Eine Raman/SERS-Markierung besteht aus einem Raman-Marker und einem Metallnanopartikel, bevorzugt einem Edelmetallnanopartikel. Beide werden zur optischen Detektion mittels oberflächenverstärkter Ramanstreuung (SERS: "Surface-enhanced Raman scattering") benötigt. Optische Detektion mittels Raman/SERS-Markierung wird z.B. in der Veröffentlichung von S. Schlücker et al., "Immuno-Raman microspectroscopy: In-situ detection of antigens in tissue specimens by surface-enhanced Raman scattering", Journal of Raman Spectroscopy, 2006 (37); S. 719-721, beschrieben.

Gemäβ einer erfindungsgemäßen Alternative liegt das Sondenmolekül in der Polymerschicht vor. Wie nachfolgend noch eingehender bei der Beschreibung des erfindungsgemäßen Verfahrens diskutiert wird, kann über die Viskosität der Polymerschicht die Beweglichkeit der Sondenmoleküle gesteuert werden. Liegt das Polymer bzw. liegen die Polymere der Polymerschicht beispielsweise als Feststoff vor, so wird eine Diffusion der Sondenmoleküle weitestgehend unterbunden. Wird dagegen das Polymer in einen Zustand niedrigerer Viskosität überführt, wird es also z.B. in den flüssigen Zustand überführt, so können die Sondenmoleküle durch die Polymerschicht diffundieren, bis sie aufgrund einer spezifischen Wechselwirkung mit einem Bioaerosolpartikel immobilisiert werden.

Alternativ liegen die Sondenmoleküle zunächst in einer außerhalb der Polymerschicht befindlichen Einheit vor. Bevorzugt handelt es sich bei der außerhalb der Polymerschicht befindlichen Einheit um die bereits oben beschriebene Vernebelungseinheit.

In einer bevorzugten Ausführungsform umfasst die erfindungsgemäße Vorrichtung weiterhin eine elektrophoretische Trennvorrichtung. Diese bewirkt das Entfernen von ungebundenen Sondenmolekülen aus dem Bereich der flächenmäßig definierten Abscheidung der Bioaerosolpartikel. Die Elektroden der elektrophoretischen Trennvorrichtung sind bevorzugt im Substrat integriert, z.B. als Metallschichten oder -streifen.

Wie oben dargelegt, beinhaltet die erfindungsgemäße Vorrichtung als Komponente (v) eine Detektionseinheit, die gegenüber dem Substrat so angebracht ist, dass die auf bzw. in der Polymerschicht befindlichen markierten Bioaerosolpartikel detektiert werden können.

Bevorzugt handelt es sich bei der Detektionseinheit um eine optische Detektionseinheit. Die optische Detektion kann bevorzugt mittels Fluoreszenzmikroskopie, Raman-Mikroskopie, insbesondere Raman/SERS-Mikroskopie, oder Lumineszenzmikroskopie, oder Kombinationen davon erfolgen.

Bevorzugt ist die Detektionseinheit gegenüber dem Substrat so angebracht, dass die markierten Bioaerosolpartikel zumindest in dem Bereich der flächenmäßig definierten Abscheidung der Bioaerosolpartikel auf der Polymerschicht detektiert werden können.

In einer bevorzugten Ausführungsform enthält die erfindungsgemäße Vorrichtung weiterhin mindestens eine Verfahr-Einheit. Diese ermöglicht, dass Substrat und optische Detektionseinheit relativ zueinander bewegt werden können. Zusätzlich kann diese Verfahr-Einheit, oder alternativ eine andere Verfahr-Einheit, bewirken, dass eine relative Bewegung zwischen Probenahme- und Abscheideeinheit und Substrat stattfindet. Die Verfahr-Einheit kann also z.B. so mit dem Substrat in Verbindung stehen, dass sich das Substrat relativ zur optischen Detektionseinheit und/oder relativ zur Probenahme- und Abscheideeinheit bewegen lässt.

In einer bevorzugten Ausführungsform ist die optische Detektionseinheit unterhalb des Substrats, welches bevorzugt optisch transparent ist, angebracht, so dass eine mikroskopische Detektion im Auflicht von unten durch das Substrat hindurch erfolgen kann.

Bevorzugt umfasst die erfindungsgemäße Vorrichtung weiterhin eine Kamera, z.B. eine CCD-Kamera, zur Bildaufnahme sowie eine Auswertungs- und Steuerungseinheit zur Datenanalyse und Steuerung der Verfahrensabläufe.

Gemäß eines weiteren Aspekts stellt die vorliegende Erfindung ein Verfahren gemäß Anspruch 8 zur Detektion von Bioaerosolpartikeln bereit.

Bezüglich des Verständnisses der Begriffe "flächenmäßig definierte Abscheidung" und "definierte Partikelgrößenfraktion der Bioaerosolpartikel" kann auf die obigen Ausführungen bei der Diskussion der erfindungsgemäßen Vorrichtung verwiesen werden.

Auch hinsichtlich eines geeigneten Partikelgrößenbereichs der definierten Partikelgrößenfraktion kann auf die obigen Ausführungen verwiesen werden.

Bevorzugt erfolgt die flächenmäßig definierte Abscheidung einer definierten Partikelgrößenfraktion der Bioaerosolpartikel durch Trägheitsabscheidung, bevorzugter durch einen oder mehrere Impaktoren und/oder Virtualimpaktoren, und/oder elektrostatische Abscheidung, d.h. die in Schritt (ii) verwendete Abscheideeinheit umfasst bevorzugt einen oder mehrere Impaktoren und/oder Virtualimpaktoren und/oder elektrostatische Abscheider.

Bezüglich der Eigenschaften und Wirkungsweise der Impaktoren bzw. Virtualimpaktoren und der elektrostatischen Abscheider kann auf die obigen Ausführungen verwiesen werden.

Bevorzugt wird die entnommene Luftprobe einem Impaktor zugeführt, für den die Polymerschicht des Substrats als Abscheidefläche bzw. Impaktionsfläche fungiert. Durch die Form bzw. Querschnittsfläche der Düsenöffnung der Impaktionsdüse wird die Abscheidefläche der Bioaerosolpartikel festgelegt und somit eine flächenmäßig definierte Abscheidung bewirkt. Bevorzugt weist dieser Impaktor eine Schlitzdüse mit einer rechteckigen Schlitzöffnung auf, wobei diese rechteckige Schlitzöffnung bevorzugt eine Länge im Bereich von 10 mm bis 50 mm und eine Breite im Bereich von 0,05 mm bis 1 mm aufweist. Andere Querschnittsflächen der Düsenöffnung sind aber auch möglich.

Bevorzugt wird die entnommene Luftprobe einem ersten Impaktor, dann einem Virtualimpaktor und anschließend einem zweiten Impaktor zugeführt wird, wobei die Polymerschicht des Substrats als Abscheidefläche bzw. Impaktorfläche des zweiten Impaktors fungiert, auf der die flächenmäßig definierte Abscheidung der definierten Partikelgrößenfraktion der Bioaerosolpartikel stattfindet. Der zweite Impaktor weist bevorzugt eine Schlitzdüse mit den oben angegebenen Abmessungen auf.

In einer bevorzugten Ausführungsform werden die Verfahrensschritte (i) und (ii) mit der oben definierten Probenahme- und Abscheideeinheit der erfindungsgemäßen Vorrichtung durchgeführt.

Bevorzugt erfolgt die flächenmäßig definierte Abscheidung der definierten Partikelgrößenfraktion der Bioaerosolpartikel in Form eines Partikelstreifens mit einer Breite im Bereich von 0,06 mm bis 1,2 mm.

Grundsätzlich kann aber die definierte Abscheidung auch in Form anderer Abscheidungsflächen erfolgen, z.B. in Form einer Kreisfläche ("punktförmig") oder einer elliptischen Fläche.

Bevorzugt beinhaltet das Substrat einen Träger, auf dem die Polymerschicht angebracht ist. Bezüglich der Eigenschaften des Substrats und des Trägers kann auf die obigen Ausführungen verwiesen werden.

Bezüglich der Eigenschaften der Polymerschicht und des Polymers bzw. der Polymere, das bzw. die diese Polymerschicht bilden, kann auf die obigen Ausführungen bei der Diskussion der erfindungsgemäßen Vorrichtung verwiesen werden.

Bevorzugt liegt bzw. liegen in Schritt (ii) das Polymer bzw. die Polymere der Polymerschicht als kristalline(r) und/oder amorphe(r) Feststoff(e) vor.

In einer bevorzugten Ausführungsform kann es sich bei der in Schritt (ii) bereitgestellten Polymerschicht um eine gefriergetrocknete Polymerschicht handeln.

Gemäß einer erfindungsgemäßen Alternative enthält die in Schritt (ii) bereitgestellte Polymerschicht bereits die mindestens eine Markierung aufweisenden Sondenmoleküle.

Wie oben dargelegt, erfolgt in Schritt (iii) des erfindungsgemäßen Verfahrens die Reduzierung der Viskosität der Polymerschicht und das in Kontakt bringen der abgeschiedenen Bioaerosolpartikel mit Sondenmolekülen, die mindestens eine Markierung aufweisen und durch molekulare Wechselwirkung spezifisch an Bioaerosolpartikel oder Bestandteile eines Bioaerosolpartikels binden können, wobei die Reduzierung der Viskosität der Polymerschicht eine Diffusion der Sondenmoleküle in der Polymerschicht ermöglicht,

Die Reduzierung der Viskosität der Polymerschicht erfolgt durch einen oder mehrere der folgenden Verfahrensschritte:

- Erwärmen der Polymerschicht,
- Zuführung von Wasser zur Polymerschicht, bevorzugt in Form von Wasserdampf und/oder Wassertröpfchen, und/oder
- Bestrahlung der Polymerschicht mit UV-Strahlung.

Bevorzugt wird die Polymerschicht in Schritt (iii) in den flüssigen Zustand überführt.

Bevorzugt sind die in Schritt (iii) erhaltene Polymerschicht und der Träger, auf dem diese angebracht ist, optisch transparent.

Bevorzugt erfolgt das in Kontakt bringen der abgeschiedenen Bioaerosolpartikel mit den Sondenmolekülen in Schritt (iii) durch Diffusion der Sondenmoleküle in der Polymerschicht, optional unter Einwirkung eines elektrischen Feldes.

Die Diffusionsgeschwindigkeit der Sondenmoleküle kann durch die Viskosität der Polymerschicht in Schritt (iii) bzw. das Ausmaß der Viskositätsreduzierung in Schritt (iii) gesteuert werden.

Wie oben dargelegt, enthält die in Schritt (ii) bereitgestellte Polymerschicht gemäß einer erfindungsgemäßen Alternative bereits die mindestens eine Markierung aufweisenden Sondenmoleküle. Alternativ oder auch ergänzend zu dieser Variante wird das Sondenmolekül der Polymerschicht in Schritt (iii) zugeführt werden. Dies kann dann sinnvoll sein, wenn das Sondenmolekül eine zu geringe Stabilität für eine längere Immobilisierung in einer festen Polymerschicht aufweist. In dieser alternativen oder ergänzenden Variante wird das Sondenmolekül bevorzugt über Wassertröpfchen einer Vernebelungseinheit der Polymerschicht zugeführt wird.

Bezüglich der Eigenschaften der Sondenmoleküle und der Markierung kann auf die obigen Ausführungen bei der Diskussion der erfindungsgemäßen Vorrichtung verwiesen werden.

Wie oben dargelegt, erfolgt in Schritt (iv) des erfindungsgemäßen Verfahrens das Entfernen von ungebundenen Sondenmolekülen aus dem flächenmäßig definierten Abscheidungsbereich der Bioaerosolpartikel. Bevorzugt erfolgt dies durch Elektrophorese. Dazu sind bevorzugt Elektroden im Substrat integriert. Bevorzugt erfolgt die elektrophoretische Migrationsbewegung orthogonal zur definierten Abscheidefläche der Bioaerosolpartikel, bei der es sich bevorzugt um die bereits oben diskutierte streifenförmige Abscheidefläche handelt.

Wie oben dargelegt, erfolgt in Schritt (v) des erfindungsgemäßen Verfahrens die Detektion der markierten Bioaerosolpartikel.

Bevorzugt erfolgt die Detektion über eine optische Detektionseinheit. Bezüglich der Eigenschaften der optischen Detektionseinheit kann auf die obigen Ausführungen bei der Diskussion der erfindungsgemäßen Vorrichtung verwiesen werden.

In einer bevorzugten Ausführungsform werden während des Schrittes (v) die optische Detektionseinheit und das Substrat relativ zueinander bewegt. Dies kann z.B. mit einer Verfahr-Einheit, wie sie oben bereits erwähnt wurde, erfolgen.

Während der Detektion der markierten Bioaerosolpartikel in Schritt (v) kann die in Schritt (iii) eingestellte, reduzierte Viskosität beibehalten werden. Alternativ ist es aber auch möglich, die Viskosität vor Beginn der Detektion oder während der Detektion wieder zu erhöhen, z.B. durch Verringerung des Wassergehalts des Hydrogels.

Durch die Wahl der oben beschriebenen Verfahrensschritte ist es möglich, dass das erfindungsgemäße Verfahren bevorzugt in einer Vorrichtung durchgeführt werden kann. Bevorzugt wird das Verfahren in der oben beschriebenen erfindungsgemäßen Vorrichtung durchgeführt.

Die Erfindung wird nachfolgend noch eingehender unter Bezugnahme auf besonders bevorzugte Ausführungsformen beschrieben.

Wie bereits oben beschrieben, werden in der Erfindung die Probenahme- und Abscheidetechnik, die Probenaufbereitung und das Probenanalyseverfahren in neuartiger Weise in einem Gerät gekoppelt.

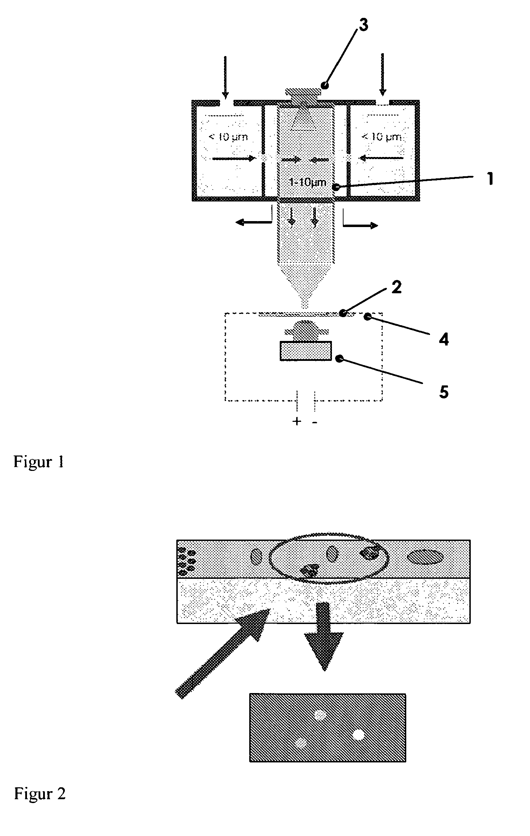

Figur 1 zeigt eine schematische Darstellung einer bevorzugten Ausführungsform der erfindungsgemäßen Vorrichtung.

Über die Probenahme- und Abscheideeinheit 1 kann durch geeignete Wahl der technischen Parameter aus dem luftgetragenen Partikelspektrum eine genau definierte Menge und eine definierte Partikelgrößenfraktion der luftgetragenen Biopartikel bzw. Bioaerosolpartikel ausgeblendet und zur Abscheidung gebracht werden. Die Abscheidung der Messobjekte erfolgt bevorzugt auf einem dünnen Streifen, vorzugsweise mittels einer Impaktionstechnik oder alternativ eines elektrostatischen Abscheideverfahrens. Durch Verwendung eines in der Probenahme- und Abscheideeinheit 1 befindlichen Virtualimpaktors können der Erfassungsvolumenstrom $Q_a$ und der Abscheidevolumenstrom $Q_m$ unabhängig voneinander gewählt werden, wobei dennoch der gesamte Anzahlstrom des erfassten und ausgeblendeten Partikelspektrums zur Abscheidung gebracht wird. In der Regel ist der Erfassungsvolumenstrom deutlich größer als der Abscheidevolumenstrom.

Die Abscheidung erfolgt bevorzugt auf einer auf einem transparenten Träger aufgebrachte Gelschicht bzw. Hydrogelschicht 2.

Die Befeuchtung des Gels kann in einer spezifischen Ausführungsform nach der Beaufschlagung mit Umweltpartikeln durch Zugabe von Nebeltröpfchen erfolgen, die mittels einer in der Probennahme- und Abscheideeinheit 1 integrierten Verneblungseinheit 3, bevorzugt eines Membranvernebelsystems erzeugt werden, welches keine Betriebsluft benötigt. Die Nebeltröpfchen werden unmittelbar dem Abscheidevolumenstrom zugeführt und von derselben Vorrichtung abgeschieden wie die Messobjekte. Alternativ zur Befeuchtung über das Membranvernebelsystem kann in einer weiteren Ausführungsform das Gel über die Bereitstellung einer Wasserdampfquelle z.B. in Form eines befeuchteten Schwamms in unmittelbarer Umgebung des Gels in Verbindung mit einem gesteuerten Volumenstrom (z.B. durch die Abscheidevorrichtung) zur Steuerung der relativen Feuchte im interessierenden Volumen befeuchtet werden. Die Anlagerung der Antikörper an die Oberflächenantigene der Messobjekte erfolgt durch Diffusion der Antikörper in der niederviskosen, bevorzugt verflüssigten Gelmatrix. Nicht gebundene Antikörper werden anschließend durch Elektrophorese mit der elektrophoretischen Trennvorrichtung 4 an den Rand der Beaufschlagungsfläche bzw. definierten Abscheidungsfläche transportiert. Die elektrophoretische Migrationsbewegung erfolgt orthogonal zur Abscheidelinie, um die zu überwindende Migrationsstrecke möglichst klein zu halten. Das schaltbare Gel wird hier als Reservoir für Antikörper und als Reaktionsmedium benutzt.

Antikörper mit kurzer biologischer Standzeit können alternativ zur Inkorporation im Gel in einer weiteren Ausführungsform über die Verneblungseinheit 3 als Nebel aus einer wässrigen Formulierung nach der Partikelsammlung mit Hilfe derselben Abscheidevorrichtung frisch zugegeben werden. Dies hat weiterhin den Vorteil einer hohen lokalen Antikörperkonzentration im Bereich der zu detektierenden Objekte und im Vergleich zur homogenen Antikörperverteilung im Gel einer weiteren Reduktion der notwendigen Trennstrecken.

Die auf einem dünnen, durchsichtigen Träger aufgebrachte Gelschicht ist nach der Verflüssigung ebenfalls optisch transparent, so dass eine spezifische Ausführungsform eine Erkennung markierter Partikel mittels bspw. Fluoreszenzmikroskopie im Auflicht von unten durch Träger- und Gelschicht hindurch erfolgen kann, deren Prinzip der optischen Detektion in Figur 2 dargestellt ist.

Die optische Erfassung 5 überdeckt in einer weiteren Ausführungsform beispielsweise die Breite des Spaltes. Die Längsrichtung kann dann über eine Verfahrvorrichtung nach markierten Partikeln abgesucht werden.

Die Bildaufnahme erfolgt sequentiell für jeden Verfahrschritt über eine einstellbare Belichtungszeit. Für die Auswertung wird eine Software verwendet, die eine digitale Bildbearbeitung, die Segmentierung der markierten Partikel und deren Charakterisierung vornimmt.

Generell können alle Arten von Sondenmolekülen bzw. Bindeliganden, d.h. Moleküle, die in der Lage sind spezifisch zu binden, zur Markierung verwendet werden. Die zum selektiven Nachweis der gesuchten biogenen Partikel eingesetzten Bindeliganden der erfindungsgemäßen Ausführungsformen werden u.a. gewählt aus der Gruppe Taxonrelevanter Oberflächenmarker-spezifischer Bindestrukturen, bestehend aus Antikörpern, deren Derivate und/oder Fragmente, synthetischen Peptiden oder chemischen Molekülen, Liganden, Lektinen, Rezeptorbindungsmolekühlen, Adhäsionsmolekülen, die an Ionenpumpen, kanalbildende Proteine binden und deren Derivaten, Mutanten oder Kombinatoren davon.

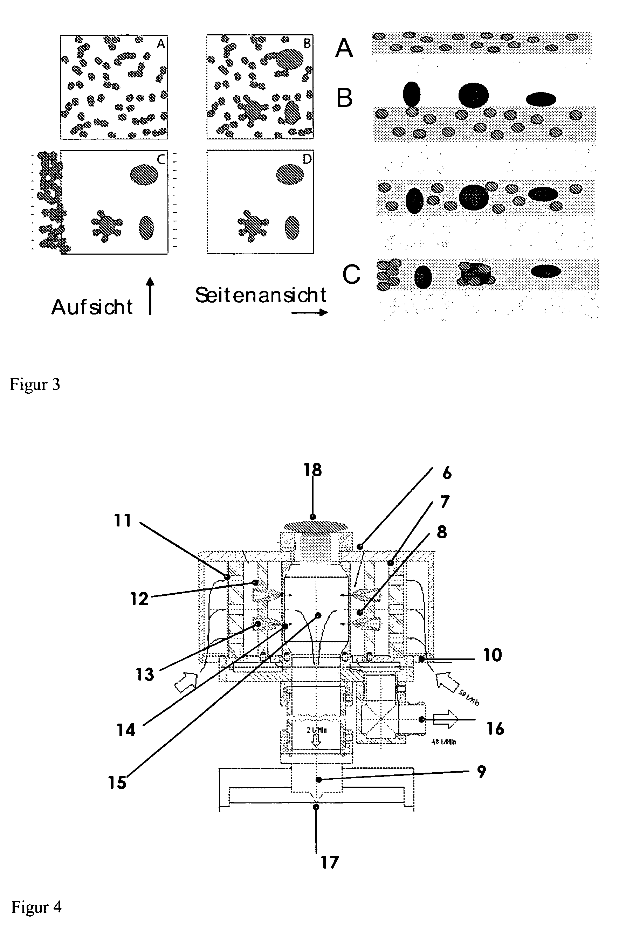

In Figur 3 wird der Prozess der Anbindung der Sondenmoleküle an die Bioaerosolpartikel im Verlauf des erfindungsgemäßen Verfahrens schematisch veranschaulicht. Dabei zeigt der Zustand A das Hydrogel mit Antikörpern vor der flächenmäßig definierten Abscheidung einer spezifischen Bioaerosolpartikelfraktion, die zum Beispiel durch Impaktion (d.h. Trägheitsabscheidung) erfolgen kann, der Zustand B zeigt das Gel nach der Impaktion und eventuellen Ankopplungsreaktion der Antikörper, der Zustand C zeigt das elektrophoretische Auswaschen der nicht gebundenen Antikörper und Zustand D zeigt die optische Detektion durch Fluoreszenz.

Eine bevorzugte Ausführungsform der Probenahme- und Abscheideeinheit wird schematisch in Figur 4 dargestellt.

Die Einheit enthält einen Ansaugkopf 6 mit darin integriertem 10-$\mu$m-Vorabscheider 7 in Form eines ersten Impaktors, einen Virtualimpaktor 8 und eine finale Einheit 9 in Form eines zweiten Impaktors zur Abscheidung der Partikel auf dem Gelträger.

Das Bioaerosol wird mit einem Ansaugvolumenstrom Qa (beispielsweise 50 1/min) von unten in einen ringförmigen Einlass 10 gesaugt und wird gleichmäßig über 12 Impaktionsdüsen 11 in gleiche Teilströme aufgeteilt, die jeweils in Form einer rotationssymmetrischen Staupunktströmung oberhalb einer Impaktionsfläche 12 radial umgelenkt werden. In dieser Strömung scheiden sich Partikel mit einem aerodynamischen Durchmesser größer als $d_{AED1}$ trägheitsbedingt auf der Impaktionsfläche 12 ab. Der Wert des Abscheidedurchmessers - beispielsweise $d_{AED1}$ = 10 $\mu$m - ist in eindeutiger Weise durch den Düsendurchmesser D und die Strömungsgeschwindigkeit u in den Impaktionsdüsen gegeben durch Auflösen der Gleichung 1 nach $d_{AED}$.

$$(1) \qquad Stk_1 = \tau(d_{AED})\, u/D$$

$Stk_1$: Trägheitsparameter, Konstante mit einem Wert von ungefähr 0,25,
$\tau(d_{AED})$: Partikelrelaxationszeit.

Partikel kleiner als $d_{AED1}$ passieren die Impaktionsstufe und gelangen in den Multidüsenvirtualimpaktor.

Der Virtualimpaktor 8 ist eine aerodynamische Trennvorrichtung, bei der eine Auftrennung des Partikelstroms ebenfalls nach Maßgabe des aerodynamischen Partikeldurchmessers im Bereich der Strömungsumlenkung einer virtuellen, rotationssymmetrischen Staupunktströmung erfolgt. Im realisierten Verfahren werden 16 identische Einzeldüsenvirtualimpaktoren 13 parallel geschaltet und in einer Einheit zusammengefasst. Das Einzeldüsensystem ist im Hinblick auf optimale Trenn- und Anreicherungscharakteristik und minimale interne Partikelverluste gestaltet. In diesem Ausführungsbeispiel tritt aus jeder Düse ein Volumenstrom von 3,12 1/min aus. 4% dieses Volumenstroms tritt in eine gegenüber liegende Empfängerdüse 14 ein, 96% der Strömung werden umgelenkt und seitlich abgesaugt. Insgesamt treten also am Beispiel der Figur 4 $Q_a$ = 50 1/min durch die 16 Düsen aus und $Q_m$ = 0,04*50 = 2 1/min in das innere Rohr 15 ein. In der Umlenkung werden Partikel größer als $d_{AED2}$ aufgrund ihrer Trägheit in den kleineren Volumenstrom überführt und gelangen in das innere Strömungsrohr 15 der Apparatur, während die komplementäre Fraktion der kleineren Partikel ($<d_{AED2}$) seitlich abgesaugt wird durch die Absaugleitung 16. Der Wert des Abscheidedurchmessers $d_{AED2}$, beispielsweise $d_{AED2}$ = 1 $\mu$m ergibt sich analog zum Impaktor aus dem Durchmesser der Strömungsdüse und der Strömungsgeschwindigkeit.

$$(2) \qquad Stk_{VI} = \tau(d_{AED})\, u/D$$

($St_{VI}$=0,9)

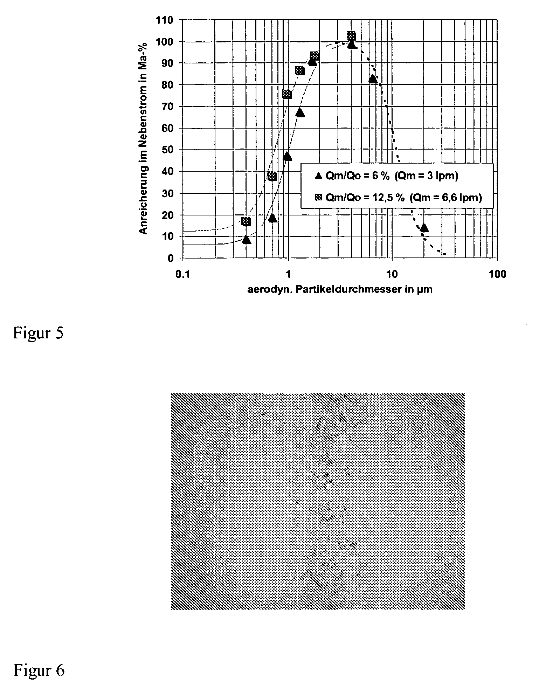

Die Figur 5 zeigt exemplarisch das Erfassungsfensters der Apparatur für die angegebenen Volumenstromverhältnisse und einen Impaktordüsendurchmesser von 5 mm und einen Durchmesser der Trenndüsen der Virtualimpaktoren von 0,9 mm. Partikel größer als 1 $\mu$m werden quantitativ vom hohen Ansaugvolumenstrom in den geringen Abscheidevolumenstrom überführt. Dies wird durch den Verlauf der linken Kurven beschrieben. Die rechte, gestrichelte Kurve ist die experimentelle Abscheidekennlinie des 10-$\mu$m Vorabscheiders im Ansaugkopf.

Durch die Wahl der Volumenströme $Q_a$ und $Q_m$ bzw. der Anzahl N1 der Impaktordüsen und N2 der Düsen des Virtualimpaktors bzw. deren Durchmesser kann die vom Gerät zu erfassende Partikelgrößenfraktion variiert und auf die Größe der zu erfassenden Objekte eingestellt werden.

Die Abscheidung der im Volumenstrom $Q_m$ enthaltenen Partikel erfolgt vorzugsweise durch Impaktion in einer ebenen, zweidimensionalen Staupunktströmung, erzeugt in einem mittels Erodierverfahren hergestellten rechteckigen Schlitz 17 mit einer Länge von 20 mm und einer Weite von 0,12 mm. Hierdurch wird eine definierte Abscheidefläche in Form eines schmalen Streifens erzielt, wie es in Figur 6 beispielhaft dargestellt ist. Die Breite des Partikelstreifens entspricht ungefähr der Schlitzweite. Die Abscheideunterlage ist hier ein Glyceringelatinegel.

In die Probenahme- und Abscheideeinheit ist ein Membranvernebler 18 luftdicht integriert. Dieser Vernebler generiert Nebeltropfen aus einer Flüssigkeit (vorzugsweise Wasser oder wässrige Lösungen) heraus ohne Verwendung von Druckluft als Betriebsstoff. Der Nebel dient zur Befeuchtung der Abscheideunterlage und/oder zur Aufgabe von Antikörpern oder anderen Reagenzien.

Das Substrat, auf dem die Partikel abgeschieden werden, hat eine Reihe von Aufgaben zu erfüllen. Es muss so beschaffen sein, dass ankommende Partikel haften bleiben. Die für den Nachweis der Pathogene notwendigen Agenzien oder ein Teil davon sind im Substrat enthalten. Diese werden darin gelagert und müssen zu gegebener Zeit freigesetzt werden. Das Substrat darf die Detektion nicht beeinflussen oder gar stören.

Eine auf einem Träger aufgebrachte Schicht eines Hydrogels kann den Anforderungen gerecht werden. Als Träger kommen sowohl Glas als auch Kunststofffolien in Frage. Wird die Fluoreszenzmessung zur Detektion genutzt, sind Polyolefine wie z.B. COC auf Grund niedriger Eigenfluoreszenz besonders geeignet. Aber auch Materialien wie Polymethylmethacrylat sind prinzipiell geeignet.

Bei dem Hydrogel handelt es sich um ein vernetztes wasserlösliches Polymer. Dafür kommen sowohl natürliche wie auch synthetische Polymere in Betracht. Es können klassische Gelmaterialien wie z.B. Agarose oder Polyacrylamid eingesetzt werden. Aber auch Stoffe wie Carrageenane, Alginate, Stärke, und deren Derivate, Cellulosederivate wie z.B. Hydroxyethylcellulose, Polyvinylalkohol, Polyvinylpyrrolidon oder Polyhydroxyethylmethacrylat kommen in Frage. Auch Mischungen aus mehreren solchen Polymeren sich möglich. Das beste Material für die jeweilige Anwendung wird durch eine Reihe von Anforderungen wie z.B. der Verträglichkeit mit Proteinen und Puffersalzen bestimmt.

Die Vernetzung des Gels kann physikalischer oder chemischer Natur sein. Die Freisetzung der Agenzien wird durch eine Verringerung der Viskosität realisiert. Dazu werden Netzwerkverbindung aufgelöst. Bei einem chemischen Netzwerk sind dazu chemische Reaktionen zur Bindungsspaltung nötig, die z.B. durch UV-Strahlung initiiert werden können. Bei physikalischen Netzwerken werden die Vernetzungsstellen durch Temperaturerhöhung oder den Zusatz von Lösungsmitteln (Wasser) gelöst.

Neben dem Netzwerkbildner kann das Hydrogel weitere Stoffe enthalten, die für die Erkennung der Keime nötig sind. Insbesondere sind das z.B. Antikörper oder andere Proteine. Um die Funktionsfähigkeit der Antikörper auch über eine längere Lagerzeit zu erhalten, können weitere Stoffe wie Puffersalze, Schutzproteine und Hilfsstoffe (z.B. Ectoin) zugesetzt werden. Darüber hinaus können dem Gel noch Substanzen beigesetzt werden, die insbesondere dessen physikalische Eigenschaften modifizieren und damit die Feineinstellung dieser Eigenschaften erlauben. So kann die Schmelztemperatur des Gels z.B. durch Glycerin oder Polyethylenglykol eingestellt werden.

Das Hydrogel wird in flüssiger Form auf den Träger aufgebracht. Die Schichtdicke kann dabei einige Mikrometer bis einige 100 μm betragen. Diese Schicht wird dann in den festen Zustand geschaltet. Je nach Art des Netzwerkes wird das durch Abkühlen, Trocknen oder eine chemische Reaktion realisiert. Für die Lagerstabilität der Inhaltsstoffe kann es vorteilhaft sein, das Gel zu lyophilisieren.

Die Wechselwirkung zwischen den zu analysierenden Partikeln und den Agenzien findet im niederviskos geschalteten Gel statt. Überschüssiges Agens muss entfernt werden, wenn es die Detektion stört (wie z.B. Farbstoff-markierte Antikörper). Proteine (Antikörper) werden mittels Elektrophorese aus dem Sichtbereich des Detektors transportiert. Dazu können im Substrat Elektroden integriert sein, z.B. als Metallschichten auf dem Träger.

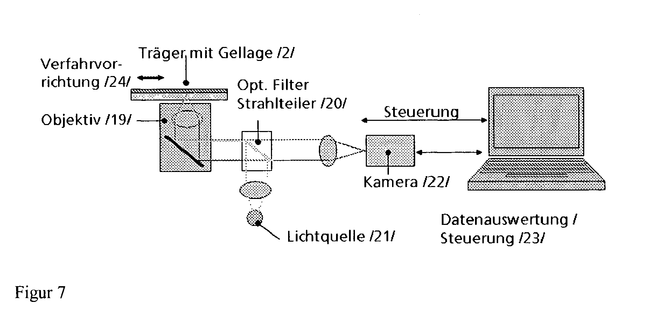

Die optische Detektionseinheit 5 besteht bevorzugt aus einer Anordnung zur mikroskopischen Darstellung und des zu untersuchenden Bereichs mit den Darstellungsverfahren Auflicht-Fluoreszenz und/oder Auflicht-Hellfeld in Verbindung mit einer Kamera (z.B: CCD-Kamera) zur Aufnahme der Bilder und einer Auswertungs- und Steuerungseinheit zur Analyse der Daten und zur Steuerung der notwendigen Abläufe. Figur 7 zeigt die schematische Darstellung eines bevorzugten Ausführungsbeispiels für die optische Detektion. Die Anordnung umfasst ein (Mikroskop-) Objektiv 19 mit ausreichend hoher numerischer Apertur und Vergrößerung (NA ≥ 0,45, V ≥ 20x), einen optischen (wellenlängenabhängigen) Strahlteiler 20 zur Einkopplung von Licht der Lichtquelle 21 in den Strahlengang, einer Flächenkamera (z.B. CCD) 22, einer Auswertungs- und Steuereinheit 23 sowie ggf. weiterer optischer Elemente (Linsen und Filtern) zur Lichtführung, Abbildung und spektralen Filterung des Anregungslichtes der Lichtquelle 21 bzw. des Fluoreszenzlichtes der markierten Partikel. Die Lichtquelle 21 wird vorzugsweise über eine oder mehrere LEDs ausgeführt, die in den Strahlengang eingekoppelt werden können. Die Erkennung markierter Partikel erfolgt mittels Fluoreszenzmikroskopie im Auflicht von unten durch Träger- und Gelschicht 2 hindurch. Zur Beurteilung der Zuverlässigkeit der Gesamtanordnung kann darüber hinaus eine visuelle Betrachtung der abgeschiedenen Partikel hilfreich sein, wozu eine mikroskopische Darstellung über Auflicht-Hellfeld-Mikroskopie optional durch einen (automatisierten oder manuellen) Strahlteil-/Filterwechsler ggf. mit einer umschaltbaren und zusätzlich in den Strahlengang einkoppelbaren Lichtquelle realisiert werden kann.

Die Bildaufnahme entlang des abgeschiedenen Partikelstreifens erfolgt sequentiell durch eine relative Verschiebung des Trägers zum Objektiv über eine Verfahrvorrichtung 24 (z.B. durch Verschieben des Trägers relativ zur Optik bzw. eine Verschiebung der Optik relativ zum Träger). Die Breite des zu analysierenden Bereichs, d.h. die Breite des Partikelstreifens entspricht vorzugsweise einer Abmessung des abgebildeten Bildfeldes auf die Kamera, so dass durch eine eindimensionale Verfahrvorrichtung sequentiell der gesamte Partikelstreifen optisch erfasst werden kann. Der Verfahrweg wird dabei so gewählt, dass die Teilbilder entlang des Streifens nahtlos aneinander grenzen oder vorzugsweise überlappend aufgenommen werden, um Partikel an der Grenzlinie zwischen zwei Aufnahmen sicher zu erfassen.

Abhängig von der Dicke der Gelschicht und des Tiefenschärfebereichs der Mikroskopoptik kann zu einer vollständigen Erfassung aller abgeschiedener Partikel auch eine sequentielle Aufnahme von Bildstapeln (Schnitten) in verschiedenen Ebenen des Gels an jeder Stelle des Partikelstreifens erforderlich sein. Die "Schnitte" durch das Gel sind in Abhängigkeit vom Tiefenschärfebereich so zu wählen, dass alle Partikel unabhängig von ihrer Lage im Gel sicher erfasst werden können.

Zur Identifikation der markierten Partikel in den Bildern bzw. Bildstapeln wird eine Software verwendet, die nach Anwendung von Bildkorrekturmechanismen (z.B. Ausleuchtungskorrekturen, Entfernung von "hot Pixeln", etc.) eine Segmentierung der markierten Partikel und deren Charakterisierung entsprechend relevanter Unterscheidungsmerkmale (z.B. mittlere Signalintensität, Partikelgröße, usw.) vornimmt. Vorzugsweise ist dabei bereits eine Identifikation der markierten Partikel aufgrund der Fluoreszenzintensität möglich. Um dies zu erreichen, ist eine Anbindung von möglichst vielen Farbstoffmolekülen an die zu detektierenden Zellen sowie die Verwendung von Farbstoffen mit hoher Quantenausbeute und hohem Extinktionskoeffizienten wünschenswert. Zur Minimierung von Einflüssen durch das Anregungslicht (z.B. Streulicht) und/oder durch Partikel mit starker Eigenfluoreszenz sind bevorzugt Farbstoffe mit hohem Stokes-Shift und mit Anregungswellenlängen im grünroten bzw. infraroten Spektralbereich (ca. > 500 nm) einzusetzen, da viele organische Partikel oder auch Mineralstäube eine starke Eigenfluoreszenz im blauen bzw. ultravioletten Spektralbereich aufweisen.

Zur Erhöhung der Zuverlässigkeit des Gesamtverfahrens kann der Einsatz weiterer Fluoreszenzmessverfahren notwendig sein (z.B. FRET, Fluoreszenzlebensdauer, usw.). So kann durch eine Markierung der interessierenden Partikel mit mehreren (mindestens zwei) Farbstoffen mit unterschiedlichen Emissionswellenlängen und einer unabhängigen Bestimmung der Fluoreszenzintensität der beiden Farbstoffe, die zueinander in einem vorher bestimmten und bekannten Verhältnis stehen, eine verbesserte Unterscheidbarkeit zu ggf. anderen fluoreszierenden, nicht markierten Partikeln erreicht werden.

Durch die Verwendung von zwei verschiedenen Antikörpern (nicht-kompetitiver Assay), die vorher markiert wurden und die an unterschiedlichen Stellen der nachzuweisenden Zelle ankoppeln, ohne sich dabei in ihrer Bindung gegenseitig zu behindern, kann die Spezifität und Sensitivität des Messverfahrens erweitert werden. Hierzu wird z.B. der Primärantikörper bereits in der Gelschicht gelagert, der Sekundärantikörper kann nach der Abscheidung der Partikel und der Ankopplung des Primärantikörpers im Gel über die Vernebelvorrichtung auf dem Gel abgeschieden und entsprechend im Gel an die passenden Zellen koppeln.

Alternativ zu dem in Figur 7 dargestellten Ausführungsbeispiel für die optische Detektionseinheit kann auch ein Laserscanning-Verfahren im Sinne eines inversen Fluoreszenz-Laserscanning-Mikroskops für die Bildaufnahme eingesetzt werden. In diesem Fall erfolgt die Bildaufnahme durch sequentielles Abrastern jedes Teilbildes mit einem (fokussierten) Laserstrahl und der Bestimmung der jeweils detektierbaren Fluoreszenzintensität über einen Detektor (z.B: Photomultiplier). Vorteil des scannenden Ausleseverfahrens ist die geringere Empfindlichkeit gegenüber Streuchlichteinflüssen - nachteilig sind der höhere gerätetechnische Aufwand und der Einsatz mechanisch bewegter Komponenten.

**Patentansprüche**

1. Eine Vorrichtung zur Messung von Bioaerosolpartikeln, umfassend

   (i) eine Probenahme- und Abscheideeinheit für die Entnahme einer Bioaerosolpartikel enthaltenden Luftprobe und die flächenmäßig definierte Abscheidung einer definierten Partikelgrößenfraktion der Bioaerosolpartikel,
   (ii) ein Substrat, welches einen Träger und eine auf diesem Träger angebrachte Polymerschicht umfasst, wobei

      - das Substrat gegenüber der Probenahme- und Abscheideeinheit so angebracht ist, dass auf der Polymerschicht die flächenmäßig definierte Abscheidung der definierten Partikelgrößenfraktion der Bioaerosolpartikel erfolgen kann, und
      - die Polymerschicht von mindestens einem Polymer gebildet wird, dessen Viskosität sich unter dem Einfluss einer äußeren Wirkung ändern kann,

      (iii) eine Vorrichtungseinheit zur Viskositätsmodifizierung der Polymerschicht,
      (iv) Sondenmoleküle, die mindestens eine Markierung aufweisen und durch molekulare Wechselwirkung spezifisch an Bioaerosolpartikel oder Bestandteile eines Bioaerosolpartikels binden können,
      (v) eine Detektionseinheit, die gegenüber dem Substrat so angebracht ist, dass die auf bzw. in der Polymerschicht befindlichen markierten Bioaerosolpartikel detektiert werden können, **dadurch gekennzeichnet, dass** die Vorrichtungseinheit zur Viskositätsmodifizierung der Polymerschicht ausgewählt wird aus einem Heiz- und/oder Kühlelement zur Erwärmung bzw. Abkühlung der Polymerschicht, einer Vernebelungseinheit zur Erzeugung von Wassertröpfchen, einem Luftbefeuchter und/oder LuRentfeuchter, eine UV-Strahlungseinheit, oder Kombinationen davon, und das Sondenmolekül in der Polymerschicht vorliegt und/oder in einer außerhalb der Polymerschicht befindlichen Einheit, bevorzugt einer Vernebelungseinheit vorliegt.

2. Die Vorrichtung nach Anspruch 1, wobei die Probenahme- und Abscheideeinheit einen oder mehrere Trägheitsabscheider, bevorzugt einen oder mehrere Impaktoren und/oder Virtualimpaktoren, und/oder mindestens einen elektrostatischen Abscheider aufweist.

3. Die Vorrichtung nach Anspruch 2, wobei die Probenahme- und Abscheideeinheit in Strömungsrichtung der entnommenen Luftprobe zuerst einen ersten Impaktor, dann einen Virtualimpaktor und schließlich einen zweiten Impaktor aufweist, wobei bevorzugt die Polymerschicht des Substrats als Abscheidefläche des zweiten Impaktors fungiert, und wobei bevorzugt der zweite Impaktor eine Schlitzdüse mit einer rechteckigen Schlitzöffnung, die eine Länge im Bereich von 10 mm bis 50 mm und eine Breite im Bereich von 0,05 bis 1 mm hat, aufweist.

4. Die Vorrichtung nach einem der vorstehenden Ansprüche, wobei das Polymer, dessen Viskosität sich unter dem Einfluss einer äußeren Wirkung ändern kann, bevorzugt reversibel ändern kann, ein hydrophiles Polymer ist, das ein Hydrogel bilden kann, welches bevorzugt aus Agarose, Polyacrylamid, Carrageenan; Alginat; Stärke, Polyvinylalkohol, Polyvinylpyrrolidon, Polyhydroxymethylmethacrylat, oder deren Gemischen ausgewählt wird.

5. Die Vorrichtung nach einem der vorstehenden Ansprüche, wobei das Sondenmoleküle ausgewählt wird aus Antikörpern, deren Derivaten und/oder Fragmenten, synthetischen Peptiden, Liganden, Lektinen, Rezeptorbindungsmolekülen, an Ionenpumpen und/oder kanalbildende Proteine bindende Adhäsionsmolekülen, und Derivaten, Mutanten oder Kombinationen davon; und/oder die Markierung aus Fluoreszenzmarkierung, Lumineszenzmarkierung, Metallmarkierung, Ramanmarkierung, oder Kombinationen davon ausgewählt wird.

6. Die Vorrichtung nach einem der vorstehenden Ansprüche, weiterhin umfassend eine elektrophoretische Trennvorrichtung zum Entfernen von ungebundenen Sondenmolekülen aus dem Bereich der flächenmäßig definierten Abscheidung der Bioaerosolpartikel.

7. Die Vorrichtung nach einem der vorstehenden Ansprüche, wobei es sich bei der Detektionseinheit um eine optische Detektionseinheit handelt, und wobei bevorzugt die optische Detektion mittels Fluoreszenzmikroskopie, Raman-Mikroskopie, insbesondere Raman/SERS-Mikroskopie, oder Lumineszenzmikroskopie, oder Kombinationen davon erfolgt.

8. Ein Verfahren zur Detektion von Bioaerosolpartikeln, umfassend folgende Schritte:

   (i) Entnahme einer Luftprobe, die Bioaerosolpartikel enthält,

   (ii) eine flächenmäßig definierte Abscheidung einer definierten Partikelgrößenfriaktion der Bioaerosolpartikel auf einer Polymerschicht eines Substrats durch eine Abscheideeinheit,

   (iii) Reduzierung der Viskosität der Polymerschicht und in Kontakt bringen der abgeschiedenen Bioaerosolpartikel mit Sondenmolekülen, die mindestens eine Markierung aufweisen und durch molekulare Wechselwirkung spezifisch an Bioaerosolpartikel oder Bestandteile eines Bioaerosolpartikels binden können, wobei die Reduzierung der Viskosität der Polymerschicht eine Diffusion der Sondenmoleküle, optional unter Einwirkung eines äußeren elektrischen Felds, in der Polymerschicht ermöglicht,

   (iv) Entfernen von ungebundenen Sondenmolekülen aus dem flächenmäßig definierten Abscheidungsbereich der Bioaerosolpartikel,

   (v) Detektion der markierten Bioaerosolpartikel; **dadurch gekennzeichnet, dass** die Reduzierung der Viskosität der Polymerschicht in Schritt (iii) durch einen oder mehrere der folgenden Verfahrensschritte erfolgt:

      - Erwärmen der Polymerschicht,
      - Zuführung von Wasser zur Polymerschicht, bevorzugt in Form von Wasserdampf und/oder Wassertröpfchen, und/oder
      - Bestrahlung der Polymerschicht mit UV-Strahlung,

und die in Schritt (ii) bereitgestellte Polymerschicht bereits die mindestens eine Markierung aufweisenden Sondenmoleküle enthält und/oder die Sondenmoleküle der Polymerschicht in Schritt (iii) zugeführt werden.

9. Das Verfahren nach Anspruch 8, wobei die flächenmäßig definierte Abscheidung einer definierten Partikelgrößenfraktion der Bioaerosolpartikel durch Trägheitsabscheidung, bevorzugt durch einen oder mehrere Impaktoren und/oder Virtualimpaktoren, und/oder durch elektrostatische Abscheidung erfolgt.

10. Das Verfahren nach einem der Ansprüche 8-9, wobei die flächenmäßig definierte Abscheidung der definierten Partikelgrößenfraktion der Bioaerosolpartikel in Form eines Partikelstreifens mit einer Breite im Bereich von 0,06 mm bis 1,2 mm erfolgt.

11. Das Verfahren nach einem der Ansprüche 8-10, wobei die Polymerschicht von mindestens einem hydrophilen Polymer gebildet wird, und das hydrophile Polymer ein Hydrogel bilden kann und bevorzugt aus Agarose, Polyacrylamid, Carrageenan, Alginat, Stärke, Polyvinylalkohol, Polyvinylpyrrolidon, Polyhydroxymethylmethacrylat, oder deren Gemischen ausgewählt wird.

12. Das Verfahren nach einem der Ansprüche 8-11, wobei in Schritt (ii) das Polymer bzw. die Polymere der Polymerschicht als kristalline(r) und/oder amorphe(r) Feststoff(e) vorliegen und die Sondenmoleküle der Polymerschicht in Schritt (iii) über Wassertröpfchen einer Vernebelungseinheit zugeführt werden.

13. Das Verfahren nach einem der Ansprüche 8-12, wobei in Schritt (iv) das Entfernen von ungebundenen Sondenmolekülen aus dem flächenmäßig definierten Abscheidungsbereich der Bioaerosolpartikel durch Elektrophorese erfolgt, und/oder die Detektion der markierten Bioaerosolpartikel in Schritt (v) mit einer optischen Detektionseinheit erfolgt, wobei bevorzugt die optische Detektion mittels Fluoreszenzmikroskopie, Raman-Mikroskopie, insbesondere Raman/SERS-Mikroskopie, oder Lumineszenzmikroskopie, oder Kombinationen davon erfolgt.

14. Das Verfahren nach einem der Ansprüche 8-13, wobei alle Verfahrensschritte in einer Vorrichtung, bevorzugt der Vorrichtung nach einem der Ansprüche 1-7 durchgeführt werden.

**Claims**

1. A device for measuring bio-aerosol particles comprising

   (i) a sample receiving and separating unit for taking an air sample containing bio-aerosol particles and depositing a defined particle size fraction of the bio-aerosol particles on a defined surface area,
   (ii) a substrate comprising a carrier and a polymer layer applied to this carrier, and

   - the substrate is applied on the sample receiving and separating unit so that the defined particle size fraction of the bio-aerosol particles can be deposited on the polymer layer in a defined manner in terms of surface area,
   and
   - the polymer layer is formed by at least one polymer, the viscosity of which can be varied under the influence of an external effect,

   (iii) a device unit for modifying the viscosity of the polymer layer,
   (iv) probe molecules which have at least one marking and which are capable of binding specifically on bio-aerosol particles or elements of a bio-aerosol particle by molecular interaction,
   (v) a detection unit which is applied in such a way relative to the substrate that the marked bio-aerosol particles disposed on or in the polymer layer can be detected,
   **characterised in that**
   the device unit for modifying the viscosity of the polymer layer is selected from a heating and/or cooling element for heating or cooling the polymer layer, an atomiser unit for creating water droplets, an air humidifier and/or air dehumidifier, a UV radiation unit or combinations thereof, and
   the probe molecules are present in the polymer layer and/or in a unit disposed outside the polymer layer, preferably an atomiser unit.

2. Device as claimed in claim 1, in which the sample receiving and separating unit has one or more inertial separators, preferably one or more impactors and/or virtual impactors, and/or at least one electrostatic separator.

3. Device as claimed in claim 2, in which the sample receiving and separating unit has a first impactor in the flow direction of the separated air sample first of all, followed by a virtual impactor and finally a second impactor, and the polymer layer of the substrate preferably acts as a deposition surface of the second impactor, and the second impactor preferably has a slotted nozzle with a rectangular slot orifice with a length in the range of from 10 mm to 50 mm and a width in the range of from 0.05 mm to 1 mm.

4. The device as claimed in one of the preceding claims, in which the polymer, the viscosity of which can be varied under the influence of an external effect, preferably reversibly varied, is a hydrophilic polymer which is capable of forming a hydrogel which is preferably selected from agarose, polyacrylamide, carrageenan, alginate, starch, polyvinyl alcohol, polyvinyl pyrrolidone, polyhydroxymethyl methacrylate, or a mixture thereof.

5. Device as claimed in one of the preceding claims, in which the probe molecules are selected from antibodies, derivatives and/or fragments thereof, synthetic peptides, ligands, lectins, receptor binding molecules, adhesion molecules binding to ion pumps and/or channel-forming proteins, and derivatives, mutants or combinations thereof; and/or the marking is selected from fluorescent marking, luminescent marking, metal marking, Raman marking or combinations thereof.

6. Device as claimed in one of the preceding claims, further comprising an electrophoretic separating device for separating non-bound probe molecules from the region where the bio-aerosol particles are deposited on a defined surface area.

7. Device as claimed in one of the preceding claims, in which the detection unit is an optical detection unit and the optical detection preferably takes place by means of fluorescence microscopy, Raman microscopy, in particular Raman/SERS microscopy, or luminescence microscopy or combinations thereof.

8. Method of detecting bio-aerosol particles comprising the following steps:

   (i) separating an air sample containing bio-aerosol particles,
   (ii) depositing a defined particle size fraction of the bio-aerosol particles on a defined surface area of a polymer layer of a substrate by means of a separator unit,
   (iii) reducing the viscosity of the polymer layer and placing the separated bio-aerosol particles in contact with probe molecules which have at least one marking and are capable of binding specifically on bio-aerosol particles or elements of a bio-aerosol particle by molecular interaction, and the process of reducing the viscosity of the polymer layer enables the probe molecules to be diffused in the polymer layer, optionally under the effect of an external electric field,
   (iv) removing non-bound probe molecules from the area where the bio-aerosol particles are deposited on a defined surface area,
   (v) detecting the marked bio-aerosol particles; **characterised in that** the viscosity of the polymer layer is reduced in step (iii) by means of one or more of the following method steps:

      - heating the polymer layer,
      - introducing water to the polymer layer, preferably in the form of water vapour and/or water droplets; and/or
      - irradiating the polymer layer with UV radiation,

   and the polymer layer used in step (ii) already contains the probe molecules with at least one marking and/or the probe molecules are introduced onto the polymer layer in step (iii).

9. Method as claimed in claim 8, whereby a defined particle size fraction of the bio-aerosol particles is deposited on a defined surface area by inertial separation, preferably by one or more impactors and/or virtual impactors, and/or by electrostatic separation.

10. Method as claimed in one of claims 8-9, whereby the defined particle size faction of the bio-aerosol particles is deposited on a defined surface area in the form of a particle strip with a width in the range of from 0.06 mm to 1.2 mm.

11. Method as claimed in one of claims 8-10, in which the polymer layer is formed by at least one hydrophilic polymer and the hydrophilic polymer is capable of forming a hydrogel and is preferably selected from agarose, polyacrylamide, carrageenan, alginate, starch, polyvinyl alcohol, polyvinyl pyrrolidone, polyhydroxymethyl methacrylate or mixtures thereof.

12. Method as claimed in one of claims 8-11, whereby the polymer or polymers of the polymer layer are present in the form of crystalline and/or amorphous substance(s) in step (ii) and the probe molecules of the polymer layer are introduced by means of water droplets from an atomiser unit in step (iii).

13. Method as claimed in one of claims 8-12, whereby non-bound probe molecules are removed from the area where the bio-aerosol particles are deposited in a defined surface area by means of electrophoresis in step (iv) and/or the marked bio-aerosol particles are detected by means of the optical detection unit in step (v), and optical detection preferably takes place by means of fluorescence microscopy, Raman microscopy, in particular Raman/SERS microscopy, or luminescence microscopy, or combinations thereof.

14. Method as claimed in one of claims 8-13, whereby all the method steps are carried out in one device, preferably the device as claimed in one of claims 1-7.

**Revendications**

1. Dispositif de mesure de particules de bioaérosol, comprenant :

(i) une unité d'échantillonnage et de séparation pour le prélèvement d'un échantillon d'air contenant des particules de bioaérosol et la séparation définie par la surface d'une fraction de tailles de particules définie des particules de bioaérosol,
(ii) un substrat qui comporte un support et une couche de polymère appliquée sur ce support, où

- le substrat, par rapport à l'unité d'échantillonnage et de séparation, est appliqué de façon telle que sur la couche de polymère peut s'opérer la séparation définie par la surface de la fraction de tailles de particules définie des particules de bioaérosol, et
- la couche de polymère est formée d'au moins un polymère dont la viscosité peut se modifier sous l'influence d'une action extérieure, (iii) une unité à dispositif permettant de modifier la viscosité de la couche de polymère,

(iv) des molécules sondes qui présentent au moins un marquage et peuvent se lier de façon spécifique, par interaction moléculaire, à des particules de bioaérosol ou à des composants d'une particule de bioaérosol,
(v) une unité de détection qui est appliquée par rapport au substrat de façon telle que les particules de bioaérosol marquées se trouvant sur ou dans la couche de polymère peuvent être détectées,
**caractérisé en ce que** l'unité à dispositif permettant de modifier la viscosité de la couche de polymère est sélectionnée parmi un élément de chauffage et/ou de refroidissement permettant de chauffer ou de refroidir la couche de polymère, une unité de nébulisation permettant de générer des gouttelettes d'eau, un humidificateur d'air et/ou un déshumidificateur d'air, une unité de rayonnement UV, ou une combinaison de ceux-ci, et la molécule sonde se présente dans la couche de polymère et/ou dans une unité qui se trouve en-dehors de la couche de polymère, et il existe de préférence une unité de nébulisation.

2. Dispositif selon la revendication 1, dans lequel l'unité d'échantillonnage et de séparation comporte un ou plusieurs séparateurs à inertie, de préférence un ou plusieurs impacteurs et/ou impacteurs virtuels, et/ou au moins un séparateur électrostatique.

3. Dispositif selon la revendication 2, dans lequel l'unité d'échantillonnage et de séparation présente, dans le sens d'écoulement de l'échantillon d'air prélevé, d'abord un premier impacteur, puis un impacteur virtuel et enfin un second impacteur, où de préférence la couche de polymère du substrat sert de surface de séparation du second impacteur, et où de préférence le second impacteur présente une buse à fente présentant une ouverture en fente verticale qui présente une longueur dans la plage de 10 mm à 50 mm et une largeur dans la plage de 0,05 à 1 mm.

4. Dispositif selon l'une des revendications précédentes, dans lequel le polymère dont la viscosité peut se modifier sous l'influence d'une action externe, et peut de préférence se modifier de façon réversible, est un polymère hydrophile qui peut former un hydrogel, de préférence sélectionné parmi l'agarose, le polyacrylamide, le carraghénane, l'alginate, l'amidon, l'alcool de polyvinyle, la polyvinylpyrrolidone, le méthacrylate de polyhydroxyméthyle ou leurs mélanges.

5. Dispositif selon l'une des revendications précédentes, dans lequel la molécule sonde est sélectionnée parmi des anticorps, leurs dérivés et/ou fragments, des peptides synthétiques, des ligands, des lectines, des molécules de liaison au récepteur, des molécules d'adhésion aux pompes ioniques et/ou liant des protéines formant un canal, et des dérivés, mutants ou combinaisons de ceux-ci ; et/ou le marquage est sélectionné parmi un marquage de fluorescence, un marquage de luminescence, un marquage métallique, un marquage pour microscopie Raman ou des combinaisons de ceux-ci.

6. Dispositif selon l'une des revendications précédentes, comprenant en outre un dispositif de séparation par électrophorèse permettant d'éliminer les molécules sondes non liées de la zone de la séparation définie par la surface des particules de bioaérosol.

7. Dispositif selon l'une des revendications précédentes, dans lequel il s'agit concernant l'unité de détection d'une unité optique de détection, et dans lequel de préférence la détection optique se fait au moyen d'une microscopie de fluorescence, d'une microscopie Raman, en particulier d'une microscopie Raman / spectroscopie Raman exaltée de surface (SERS), ou d'une microscopie de luminescence, ou d'une combinaison de celles-ci.

8. Procédé de détection de particules de bioaérosol, comportant les étapes suivantes :

(i) prélèvement d'un échantillon d'air qui contient des particules de bioaérosol,
(ii) séparation définie par la surface d'une fraction de tailles de particules définie des particules de bioaérosol sur une couche de polymère d'un substrat, par une unité de séparation,

(iii) réduction de la viscosité de la couche de polymère et mise en contact des particules de bioaérosol séparées avec des molécules sondes qui présentent au moins un marquage et peuvent se lier de façon spécifique, par interaction moléculaire, aux particules de bioaérosol ou à des constituants d'une particule de bioaérosol, où la réduction de la viscosité de la couche de polymère permet une diffusion des molécules sondes, de façon optionnelle sous l'effet d'un champ électrique externe, dans la couche de polymère,

(iv) élimination de la zone de séparation définie par la surface des particules de bioaérosol des molécules sondes non liées,

(v) détection des particules marquées de bioaérosol,

**caractérisé en ce que**

la réduction de la viscosité de la couche de polymère dans l'étape (iii) se fait par une ou plusieurs des étapes de procédé suivantes :

- chauffage de la couche de polymère,
- amenée d'eau vers la couche de polymère, de préférence sous la forme de vapeur d'eau et/ou de gouttelettes d'eau, et/ou
- irradiation de la couche de polymère avec un rayonnement UV,

et la couche de polymère mise à disposition à l'étape (ii) contient déjà la molécule sonde présentant au moins un marquage, et/ou la molécule sonde est amenée à la couche de polymère lors de l'étape (iii).

9. Procédé selon la revendication 8, dans lequel la séparation définie par la surface d'une fraction de tailles de particules définie des particules de bioaérosol se fait par séparation par inertie, de préférence par un ou plusieurs impacteurs et/ou impacteurs virtuels, et/ou par séparation électrostatique.

10. Procédé selon l'une des revendications 8 ou 9, dans lequel la séparation définie par la surface de la fraction de tailles de particules définie des particules de bioaérosol se fait sous la forme d'une bande de particules présentant une largeur dans la plage de 0,06 à 1,2 mm.

11. Procédé selon l'une des revendications 8 à 10, dans lequel la couche de polymère est formée d'au moins un polymère hydrophile, et le polymère hydrophile peut former un hydrogel et est de préférence sélectionné parmi l'agarose, le polyacrylamide, le carraghénane, l'alginate, l'amidon, l'alcool de polyvinyle, la polyvinylpyrrolidone, le méthacrylate de polyhydroxyméthyle ou leurs mélanges.

12. Procédé selon l'une des revendications 8 à 11, dans lequel dans l'étape (ii), le polymère ou les polymères de la couche de polymère se présente(nt) sous la forme d'un ou de plusieurs solides cristallins et/ou amorphes et la molécule sonde de la couche de polymère est amenée à l'étape (iii) par des gouttelettes d'eau d'une unité de nébulisation.

13. Procédé selon l'une des revendications 8 à 12, dans lequel à l'étape (iv), l'élimination des molécules sondes non liées de la plage de séparation définie par la surface des particules de bioaérosol se fait par électrophorèse, et/ou la détection des particules de bioaérosol marquées à l'étape (v) se fait avec une unité optique de détection, où la détection optique se fait de préférence au moyen d'une microscopie de fluorescence, d'une microscopie Raman, en particulier d'une microscopie Raman / spectroscopie Raman exaltée de surface (SERS), ou d'une microscopie de luminescence, ou d'une combinaison de celles-ci.

14. Procédé selon l'une des revendications 8 à 13, dans lequel toutes les étapes de procédé sont conduites dans un dispositif, de préférence dans le dispositif selon l'une des revendications 1 à 7.

Figur 1

Figur 2

Aufsicht          Seitenansicht

Figur 3

Figur 4

Figur 5

Figur 6

Verfahrvorrichtung /24/   Träger mit Gellage /2/

Opt. Filter
Strahlteiler /20/

Objektiv /19/

Steuerung

Kamera /22/

Lichtquelle /21/

Datenauswertung /
Steuerung /23/

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1750129 A2

**In der Beschreibung aufgeführte Nicht-Patentliteratur**

- **William C. Hinds.** Aerosol Technology - Properties. behaviour, and measurement of airborne particles. John Wiley & Sons, 1999

- **S. Schlücker et al.** Immuno-Raman microspectroscopy: In-situ detection of antigens in tissue specimens by surface-enhanced Raman scattering. *Journal of Raman Spectroscopy,* 2006, 719-721